# EUROPÄISCHE PATENTANMELDUNG

(11) **EP 1 205 448 A2**
(43) Veröffentlichungstag der Anmeldung: **15.05.2002**
(21) Anmeldenummer: 01125780.5
(22) Anmeldetag: 26.10.2001
(51) Int. Cl.: C03B 37/014, C03B 19/14

(54) **Verfahren und Vorrichtung zur Herstellung eines SiO2-Glas-Rohlings**

(30) Priorität: 08.11.2000 DE 10055357
(71) Anmelder: Heraeus Tenevo AG, 63450 Hanau (DE)
(72) Erfinder: Heinz, Fabian, 63762 Grossostheim (DE)
(74) Vertreter: Staudt, Armin Walter

(57) **Zusammenfassung**

Bei einem bekannten Verfahren für die Herstellung eines SiO₂-Rohlings werden SiO₂-Partikel in einer Brennerflamme eines Abscheidebrenners gebildet und unter Einwirkung eines elektrischen Feldes auf einem Substrat abgelagert. Um hiervon ausgehend ein einfaches und kostengünstiges Verfahren anzugeben, mittels dem Rohlinge mit vorgegebener, insbesondere axial homogener Masse- und Dichteverteilung, herstellbar sind, wird erfindungsgemäß vorgeschlagen, dass die geometrische Form der Brennerflamme (8) in Abhängigkeit der geometrischen Kenngröße einer der Brennerflamme (8) zugeordneten Ablagerungsfläche (12; 21) des Substrats (1) durch Einwirkung des elektrischen Feldes (9) eingestellt wird. Eine zur Durchführung des Verfahrens geeignete Vorrichtung umfasst ein Substrat, mindestens einen Abscheidebrenner zur Erzeugung von SiO₂-Partikeln in einer dem Abscheidebrenner zugeordneten Brennerflamme, eine Messeinrichtung zu Erfassung einer geometrischen Kenngröße im Bereich einer Ablagerungsfläche des SiO₂-Rohlings und ein Elektrodenpaar, das mit einer Spannungsquelle verbunden, zur Erzeugung eines im Bereich der Brennerflamme wirkenden elektrischen Feldes (9), das in Abhängigkeit von der geometrischen Kenngröße der der Brennerflamme (8) zugeordneten Ablagerungsfläche (12; 21) des Substrats (1) einstellbar ist.

## Beschreibung

Die vorliegende Erfindung betrifft ein Verfahren für die Herstellung eines SiO₂-Rohlings, bei welchem SiO₂-Partikel in einer Brennerflamme eines Abscheidebrenners gebildet und unter Einwirkung eines elektrischen Feldes auf einem Substrat abgelagert werden

Weiterhin betrifft die Erfindung ein Verfahren für die Herstellung eines SiO₂-Rohlings unter Einsatz mehrerer, mit äquidistantem Abstand voneinander entlang eines um eine Längsachse rotierenden Substrats angeordneter Abscheidebrenner, denen jeweils eine Brennerflamme zugeordnet ist, in welcher SiO₂-Partikel gebildet und unter Einwirkung eines elektrischen Feldes auf dem Substrat abgelagert werden.

Darüber hinaus betrifft die Erfindung auch eine Vorrichtung zur Herstellung eines SiO₂-Rohlings, mit einem Substrat, mit mindestens einem Abscheidebrenner zur Erzeugung von SiO₂-Partikeln in einer dem Abscheidebrenner zugeordneten Brennerflamme, mit einer Messeinrichtung zu Erfassung einer Größe (oder Form) im Bereich einer Ablagerungsfläche des SiO₂-Rohlings und mit einem Elektrodenpaar, das mit einer Spannungsquelle verbunden, zur Erzeugung eines im Bereich der Brennerflamme wirkenden elektrischen Feldes dient.

Verfahren und Vorrichtung der genannten Gattung sind aus der DE-A1 196 29 170 bekannt. Zur Herstellung eines porösen, zylinderförmigen SiO₂-Körpers (im folgenden auch als "Sootkörper" bezeichnet), werden in der Knallgasflamme mehrerer Hydrolyse-Brenner SiO₂-Partikel erzeugt und auf einem waagerecht orientierten, um seine Längsachse rotierenden Trägerrohr SiO₂-Partikel schichtweise abgeschieden. Die Brenner sind mit äquidistantem Abstand von etwa 15 cm zueinander auf einem parallel zur Längsachse des Trägerrohrs verlaufenden Brennerblock montiert. Der Brennerblock wird entlang der sich bildenden porösen, zylinderförmigen Vorform zwischen einem linken und einem rechten Wendepunkt mittels einer regelbaren Verschiebeeinrichtung hin- und herbewegt, wobei die Amplitude dieser Translationsbewegung des Brennerblocks kleiner ist als die Länge der Vorform.

Zur Erhöhung der Abscheiderate der SiO₂-Partikel wird zwischen dem Trägerrohr und den Hydrolyse-Brennern ein elektrisches Feld angelegt. Hierzu ist eine Elektrode in der Innenbohrung des Trägerrohres vorgesehen, die zweite Elektrode (Außenelektrode) wird durch ein langgestrecktes metallisches Gitter gebildet, das entweder mit dem Brennerblock verbunden ist oder das zwischen den Hydrolyse-Brennern und dem Trägerrohr angeordnet ist. Zwischen den beiden Elektroden wird mittels einer elektrischen Gleichspannungsquelle eine Potentialdifferenz von einigen 10 kV aufrechterhalten. Das elektrische Feld erzeugt eine elektrostatische Aufladung der dielektrischen SiO₂-Partikel, die dadurch in Richtung auf den Sootkörper beschleunigt werden. Daraus resultiert eine Verbesserung der Abscheideeffizienz gegenüber dem üblichen Verfahren ohne diese elektrostatische Aufladung.

Bei der Herstellung derartiger Sootkörper als Ausgangsmaterial für Vorformen für optische Fasern stellt sich grundsätzlich das Problem der Homogenität des Sootkörpers. Um möglichst gleichmäßige Abscheidebedingungen und einen axial homogenen Sootkörper zu erhalten, werden bei dem bekannten Verfahren mittels der Außenelektrode Ladungspunkte erzeugt, die die Raumform des Sootkörpers nachbilden. Jedoch lassen sich dadurch lokale Überhitzungen des Sootkörpers - insbesondere durch das zweimalige rasch aufeinander folgende Aufheizen bei der Umkehr der Bewegungsrichtung im Bereich der Wendepunkte - nicht vermeiden. Dieser thermische Effekt macht sich insbesondere beim Einsatz eines Brennerblocks bemerkbar, denn durch die Vielzahl der Brennerwendepunkte kann es über die gesamte Rohlingoberfläche zu lokalen Überhitzungen und dadurch zu axialen Dichte- und Masseschwankungen im Rohling kommen. Dichte- und Masseschwankungen führen jedoch zu Bereichen unterschiedlicher Reaktivität im Rohling, die sich insbesondere bei nachfolgenden chemischen Reaktionen bei der Weiterverarbeitung zu einer Vorform bemerkbar machen und beispielsweise nach dem Sintern Inhomogenitäten hinterlassen könnten.

Konstruktive Unterschiede verschiedener Abscheidebrenner führen zu unterschiedlichen Abscheideraten und zu unterschiedlichen Temperaturen der Brennerflamme, was sich ebenfalls in Dichte- und Masseänderungen im Rohling äußern kann. Dies erfordert einen hohen Justage- und Korrekturaufwand nach jedem Austausch eines Abscheidebrenners.

Darüber hinaus ergeben sich aufgrund der mit dem Abscheideprozess zunehmenden Masse und Größe des SiO₂-Rohlings thermische Effekte, die die Abscheiderate und die Temperatur während der Abscheidung beeinflussen und damit ebenfalls zu radialen oder axialen Änderungen der Rohling-Dichte oder -Masse führen können.

Der Erfindung liegt die Aufgabe zugrunde, ein einfaches und kostengünstiges Verfahren anzugeben, mittels dem Rohlinge mit vorgegebener, insbesondere axial homogener Masse- und Dichteverteilung, herstellbar sind, sowie eine zur Durchführung des Verfahrens geeignete, einfache Vorrichtung bereitzustellen.

Hinsichtlich des Verfahrens wird diese Aufgabe einerseits ausgehend von dem eingangs genannten Verfahren erfindungsgemäß dadurch gelöst, dass die geometrische Form der Brennerflamme in Abhängigkeit einer geometrischen Kenngröße einer der Brennerflamme zugeordneten Ablagerungsfläche des Substrats durch Einwirkung des elektrischen Feldes eingestellt wird.

Beim erfindungsgemäßen Verfahren wird ein elektrisches Feld erzeugt, das auf die geometrische Form der Brennerflamme veränderbar einwirkt, entweder durch Änderung der im Bereich der Brennerflamme wirksamen Feldstärke, oder durch Maßnahmen, welche die Richtung der Feldlinien im Bereich der Brennerflamme verändern. Eine Veränderung der auf die Brennerflamme einwirkenden Feldstärke oder eine Änderung der Richtung der Feldlinien führt zu einer Änderung der Brennerflammen-Geometrie.

Diese Wirkung des elektrischen Feldes auf die Geometrie der Brennerflamme wird dazu eingesetzt, eine homogene Dichte- und Masseverteilung innerhalb des SiO₂-Rohligs zu erzielen, indem die geometrische Form der Brennerflamme in Abhängigkeit von einer geometrischen Kenngröße einer der Brennerflamme zugeordneten Ablagerungsfläche des Substrats eingestellt wird. Unter einer geometrischen Kenngröße in diesem Sinne wird eine geometrische Abmessung verstanden - beispielsweise eine Länge oder ein Durchmesser - oder eine geometrische Form - beispielsweise eine Krümmung. Im folgenden wird auch der Ausdruck "Größe oder Form der Ablagerungsfläche" als anschaulicheres Synonym für die "geometrische Kenngröße der Ablagerungsfläche" gebraucht.

Beispielsweise kann eine lokale Abweichungen in der Form oder Größe der Ablagerungsfläche kompensiert oder vermieden werden, indem die Breite der Brennerflamme durch die Wirkung des elektrischen Feldes in diesem Bereich entsprechend verringert oder vergrößert wird. Hierzu wird die Form oder Größe der Ablagerungsfläche erfasst. Diese Erfassung kann während des Abscheideprozesses stattfinden oder danach. Im letzteren Fall wird die Ablagerungsfläche des Rohlings vermessen, so dass im Falle lokaler Abweichungen in der Form oder Größe der Ablagerungsfläche diese beim nächsten Prozess durch geeignete Änderungen der Brennerflamme in diesem Bereich der Ablagerungsfläche kompensiert werden können. Die Größe oder Form der Ablagerungsfläche wird durch direktes Messen der jeweiligen Abmessung erfasst, oder durch Ermittlung eines mit der geometrischen Abmessung der Ablagerungsfläche korrelierbaren Kennwertes - wie etwa der Abscheidedauer, dem Gewicht oder dem Volumen des Rohlings.

Darüber hinaus erlaubt das erfindungsgemäße Verfahren eine kontinuierliche Anpassung des geometrischen Form der Brennerflamme an die Größe oder Form der Ablagerungsfläche. Beispielsweise kann zu Beginn eines Abscheideprozesses eine schmale Brennerflamme eingestellt werden, die anschließend mit zunehmendem Außendurchmesser des Rohlings kontinuierlich oder schrittweise aufgeweitet wird. Diese Verfahrensweise kann nicht nur zu einer Homogenisierung hinsichtlich der radialen und axialen Masse- und Dichteverteilung eingesetzt werden, sondern sie trägt auch zu einer Erhöhung der Abscheideeffizienz der SiO₂-Partikelabscheidung bei.

Die Einstellung des elektrischen Feldes und die lokale Größe oder Form der Ablagerungsfläche sind miteinander korreliert, derart, dass in Abhängigkeit der Größe oder Form der Ablagerungsfläche ein vorgegebenes elektrisches Feld auf die Brennerflamme einwirkt, so dass eine gezielte Einstellung der geometrischen Form der Brennerflamme ermöglicht wird. Dies kann zum Beispiel dadurch erreicht werden, dass elektrische Feld entsprechend der lokal zu ändernden Ablagerungsfläche örtlich verschoben wird - zum Beispiel dem Bewegungsablauf des Abscheidebrenners folgend - und dabei zeitlich verändert wird. Oder auch dadurch, dass ein örtlich festes aber zeitlich variables elektrisches Feld erzeugt wird, dessen Wirkung auf die Brennerflamme je nach der lokalen Größe oder Form der Ablagerungsfläche verschieden ist. Der Abscheidebrenner kann sich entlang des Substrats bewegen oder er kann örtlich fixiert sein. In jedem Fall erfährt die dem Abscheidebrenner zugeordnete Brennerflamme eine "zeitliche Änderung des auf sie einwirkenden elektrischen Feldes", was im folgenden auch als "Feldänderung" bezeichnet wird.

Durch das erfindungsgemäße Verfahren kann die Brennerflamme und damit die Oberflächentemperatur und die Dichte- und Massenverteilung allein durch die "Feldänderung" in weitem Rahmen variiert werden. Eine Änderungen von Strömungsgeschwindigkeiten oder Gasmengen ist hierfür nicht erforderlich. Damit sind Rohlinge mit vorgegebener Masse- und Dichteverteilung bei vergleichsweise geringem Steuerungs- und Regelungsaufwand herstellbar.

Die Wirkung des elektrischen Feldes auf die Brennerflamme beruht auf elektrisch geladenen Teilchen in der Brennerflamme. Dabei kann es sich um ionisierte Teilchen oder um elektrostatisch aufgeladene Teilchen handeln. lonisierte Teilchen sind vorwiegend im unteren Bereich der Brennerflamme konzentriert, so dass dort die Wirkung des elektrisches Feld größer ist als im oberen Bereich der Brennerflamme.

Unter einem SiO₂-Rohling wird ein Körper verstanden, der - abgesehen von Dotierstoffen - vollständig aus SiO₂ besteht. Als Abscheidebrenner kommen die bei Herstellung von synthetischem Quarzglas bekannten Brenner - insbesondere Knallgasbrenner und Plasmabrenner - in Betracht.

Eine "Feldänderung" wirkt sich auf die Ausdehnung der Brennerflamme in Richtung der Feldlinien aus. Die Feldlinien können in Richtung der Ausbreitungsrichtung der Brennerflamme verlaufen. Vorzugsweise verlaufen die Feldlinien jedoch innerhalb der Brennerflamme im wesentlichen senkrecht zur Ausbreitungsrichtung der Brennerflamme, so dass sich eine "Feldänderung" auf die laterale Ausdehnung der Brennerflamme auswirkt. Auf diese Weise lässt sich besonders einfach eine Verbreiterung oder eine Einengung der Brennerflamme erreichen. Gegenüber dem Zustand ohne elektrisches Feld lässt sich der maximale Flammendurchmesser um das Mehrfache aufweiten, wobei dies abhängig vom optimalen Arbeitsbereich der Brennerflamme ohne elektrisches Feld ist. Deutliche Effekte hinsichtlich der Massenverteilung und der Maximaltemperatur werden bei Flammenaufweitungen ab etwa 20% des anfänglichen Durchmessers (ohne elektrisches Feld) beobachtet. Eine Aufweitung um mehr als das 5-fache ist üblicherweise so weit außerhalb des optimalen Arbeitsbereichs der Brennerflamme, dass dies Einbußen hinsichtlich der Abscheiderate mit sich bringt.

Bei einer Ablagerungsfläche in Form einer Zylindermantelfläche wird vorzugsweise deren Außendurchmesser ermittelt, wobei durch Einwirkung des elektrischen Feldes die Breite der Brennerflamme in Abhängigkeit vom Außendurchmesser eingestellt wird. Unter der Breite der Brennerflamme wird hier deren Abmessung senkrecht zur Hauptausbreitungsrichtung verstanden. Die Breite kann prinzipiell in jeder beliebigen Richtung verändert werden, vorzugsweise in Richtung der Zylinderachse der Ablagerungsfläche oder senkrecht dazu. Die letztgenannte Variante hat im Fall von Abscheidebrennern, die in Richtung der Zylinderachse benachbart sind, den Vorteil, dass sich die benachbarten Brennerflammen bei einer Verbreiterung gegenseitig nicht wesentlich beeinträchtigen.

Auf die Homogenität der axialen Dichte- und Masseverteilung wirkt es sich besonders vorteilhaft aus, wenn die geometrische Kenngröße der Ablagerungsfläche fortlaufend ermittelt, und die geometrische Form der Brennerflamme in Abhängigkeit von der geometrische Kenngröße verändert wird. Abweichungen von einem vorgegeben Sollwert oder Mittelwert der Größe oder der Form der Ablagerungsfläche können dadurch schnell erfasst und kompensiert werden. Außerdem ermöglicht diese Verfahrensweise eine laufende Anpassung der geometrischen Form der Brennerflamme an die geometrische Kenngröße der Ablagerungsfläche. Unter einer "fortlaufenden Ermittlung der Ablagerungsfläche" wird hier sowohl eine kontinuierliche Erfassung der Größe oder Form, als auch eine Erfassung von Zeit zu Zeit verstanden.

Es wird eine Verfahrensweise bevorzugt, bei der mehrere, entlang des Substrats angeordnete und axial voneinander beabstandete Abscheidebrenner eingesetzt werden, die in vorgegebenem Bewegungsablauf synchron entlang des sich bildenden Rohlings zwischen Wendepunkten hin- und herbewegt werden, wobei jedem Abscheidebrenner eine Ablagerungsfläche zugeordnet, und für jede Ablagerungsfläche deren geometrische Kenngröße ermittelt, und die geometrische Form der jeweiligen Brennerflamme in Abhängigkeit von der ermittelten geometrische Kenngröße der Ablagerungsfläche durch Einwirkung des elektrischen Feldes individuell eingestellt wird.

Die Abscheidebrenner zeigen hierbei den gleichen Bewegungsablauf entlang des Substrats. Die Strecke zwischen den Wendepunkten der Brennerbewegung wird im folgenden als "Bewegungsstrecke" bezeichnet. Die Brennerflammen der Abscheidebrenner werden entlang ihrer "Bewegungsstrecke" durch eine "Feldänderung" je nach der Größe oder Form ihrer jeweiligen Ablagerungsfläche individuell beeinflusst und verändert.

Dabei ist jedem der Abscheidebrenner jeweils mindestens ein Elektrodenpaar zur Erzeugung des elektrischen Feldes im Bereich der ihm zugeordneten Brennerflamme oder entlang der jeweiligen "Bewegungsstrecke" zugeordnet. Die Feldlinien verlaufen vorzugsweise senkrecht oder parallel zur Längsachse des Substrats und zur Hauptausbreitungsrichtung der Brennerflammen.

Es hat sich als günstig erwiesen, die geometrische Abmessung der jeweiligen Ablagerungsflächen zu regeln, wobei als Stellgröße für die Regelung die den Brennerflammen jeweils zugeordneten elektrischen Felder dienen. Über die jeweiligen elektrischen Felder wird die Form der jeweiligen Brennerflamme beeinflusst, wie oben beschreiben. Die Regelung ermöglicht eine genaue Einhaltung einer vorgegebenen Sollgröße oder Sollform der Ablagerungsfläche bzw. eines über die Rohling-Länge gleichen Mittelwerts.

Besonders bewährt hat es sich auch, der individuellen Einstellung der den Brennerflammen zugeordneten elektrischen Felder eine mit dem Bewegungsablauf korrelierte, synchrone Änderung der jeweiligen elektrischen Felder zu überlagern. Die mit dem Bewegungsablauf korrelierte, synchrone Änderung der jeweiligen elektrischen Felder erlaubt eine positionsabhängige Anpassung der Brennerflammen, unabhängig von der Größe und Form der Ablagerungsfläche. Eine derartige Anpassung der Brennerflammen ist beispielsweise dann von Vorteil, wenn in Abhängigkeit von Position der Abscheidebrenner bei der Brennerbewegung regelmäßig wiederkehrende Änderungen in der Oberflächentemperatur auftreten, wie dies bei oszillierenden Abscheidebrennern im Bereich der Wendepunkte der Fall ist.

Es hat sich als vorteilhaft erwiesen, das elektrische Feld derart einzustellen, dass eine plötzliche Gasentladung vermieden wird. Erfindungsgemäß beeinflusst das elektrische Feld in erster Linie die geometrische Form der Brennerflamme, jedoch nicht die Bildung der SiO₂- oder Dotierstoff-Partikel. Eine plötzliche Gasentladung, etwa in Form einer Bogen- oder Glimmentladung oder in Form eines Funkens, kann Inhomogenitäten im Abscheidevorgang erzeugen und wird daher möglichst vermieden.

Erfindungsgemäß wird die oben angegebene technische Aufgabe andererseits auch dadurch gelöst, dass ausgehend von dem eingangs genannten Verfahren unter Einsatz mehrerer, mit äquidistantem Abstand voneinander entlang eines um eine Längsachse rotierenden Substrats angeordneter Abscheidebrenner, die Breite der jeweiligen Brennerflamme - in Richtung der Substrat-Längsachse gesehen - mittels eines auf sie einwirkenden elektrischen Feldes in einem vorgegebenen Änderungszyklus verändert wird, derart, dass die Änderungszyklen benachbarter Brennerflammen synchron und phasenverschoben sind.

Bei dieser Verfahrensweise werden mehrere, mit äquidistantem Abstand voneinander entlang eines um eine Längsachse rotierenden Substrats angeordnete Abscheidebrenner eingesetzt (im folgenden als "Brennerreihe" bezeichnet). Auf die Brennerflammen der Abscheidebrenner wirkt jeweils mindestens ein elektrisches Feld ein, das eine zyklische Änderung der geometrischen Form der Brennerflamme bewirkt. Im einfachsten Fall ist jeder Brennerflamme ein separates elektrisches Feld zugeordnet. Da die "Feldänderung" synchron erfolgt, ist der Regelaufwand gering. Die "Feldänderung" kann stufenweise oder kontinuierlich erfolgen. Wesentlich ist, dass die Änderungszyklen benachbarter Brennerflammen phasenverschoben, vorzugsweise gegenphasig sind. Bei gegenphasigen Änderungszyklen zeigt beispielsweise einer der Abscheidebrenner eine vergleichsweise schmale Brennerflamme, die eine hohe Oberflächentemperatur bei enger Masseverteilung der abgeschiedenen SiO₂-Partikel erzeugt, während gleichzeitig die beiden benachbarten Abscheidebrenner eine vergleichsweise weite Brennerflamme aufweisen und damit eine dementsprechend niedrigere Oberflächentemperatur bei gleichzeitig breiter Masseverteilung erzeugen. Dadurch lassen sich nicht nur Temperaturspitzen vermeiden, sondern auch bei einer ortsfesten - also nicht oszillierenden - Brennerreihe axiale Dichte- und Masseschwankungen minimieren. Auf die obigen Erläuterungen zu den Wirkungen des elektrischen Feldes auf die Brennerflamme und auf die Begriffsdefinitionen wird Bezug genommen.

Unabhängig von der synchronisierten "Feldänderung" lässt sich die Brennerflamme jedes Abscheidebrenners durch ein auf ihn einwirkendes elektrisches Feld auch individuell einstellen. Konstruktive Unterschiede der Abscheidebrenner sind so kompensierbar.

Hinsichtlich der Vorrichtung wird die oben angegebene Aufgabe ausgehend von der eingangs beschriebenen Vorrichtung erfindungsgemäß dadurch gelöst, dass das elektrische Feld in Abhängigkeit von einer geometrische Kenngröße einer der Brennerflamme zugeordneten Ablagerungsfläche des Substrats einstellbar ist.

Die erfindungsgemäße Vorrichtung gibt in Abhängigkeit von der geometrischen Kenngröße (im folgenden wiederum auch als "Größe oder Form" bezeichnet) einer der Brennerflamme zugeordneten Ablagerungsfläche eine "Feldänderung" im Sinne des oben erläuterten Verfahrens vor, durch welche die Geometrie der Brennerflamme beeinflusst wird. Die Größe oder Form der Ablagerungsfläche wird mittels der Messeinrichtung erfasst.

Die Feldänderung kann zum Beispiel dadurch erreicht werden, dass das elektrische Feld entsprechend der lokal zu ändernden Ablagerungsfläche örtlich verschoben wird - zum Beispiel dem Bewegungsablauf des Abscheidebrenners folgend - und dabei zeitlich verändert wird. Oder auch dadurch, dass ein örtlich festes aber zeitlich variables elektrisches Feld erzeugt wird, dessen Wirkung auf die Brennerflamme je nach der lokalen Größe oder Form der Ablagerungsfläche verschieden ist. Der Abscheidebrenner kann sich entlang des Substrats bewegen oder er kann örtlich fixiert sein. In jedem Fall erfährt die dem Abscheidebrenner zugeordnete Brennerflamme eine zeitliche Änderung des auf sie einwirkenden elektrischen Feldes (Feldänderung).

Mittels der erfindungsgemäßen Vorrichtung ist es möglich, in Abhängigkeit von der Größe oder Form einer der Brennerflamme zugeordneten Ablagerungsfläche eine bestimmte Wirkung des auf die Brennerflamme einwirkenden elektrischen Feldes und damit eine charakteristische Brennerflamme zuzuordnen. Dadurch läßt sich eine vorgegebene axiale oder radiale Dichteverteilung im Rohling gezielt einstellen. Hinsichtlich der Erzeugung und Wirkung des elektrischen Feldes auf die Brennerflamme wird auf die obigen Erläuterungen zum erfindungsgemäßen Verfahren hingewiesen. Mittels der erfindungsgemäßen Vorrichtung ist ein Rohling mit vorgegebener Dichteverteilung bei vergleichsweise geringem Steuerungs- und Regelungsaufwand herstellbar.

Wie bereits oben erläutert, kommen als Abscheidebrenner die bei Herstellung von synthetischem Quarzglas bekannten Brenner - insbesondere Knallgasbrenner und Plasmabrenner - in Betracht.

Vorzugsweise ist das Elektrodenpaar seitlich zur Brennerflamme angeordnet. Die Elektroden sind sich gegenüberliegend um die Brennerflamme angeordnet, so dass die Feldlinien innerhalb der Brennerflamme im wesentlichen senkrecht zur Ausbreitungsrichtung der Flamme verlaufen. In bevorzugten Spezialfällen ist das Elektrodenpaar seitlich zur Brennerflamme angeordnet - und zwar in Richtung der Substrat-Längsachse gesehen oder senkrecht dazu. Im erstgenannten Fall liegen sich die Elektroden so gegenüber, dass die elektrische Feldlinien in einer Richtung parallel zur Substrat-Längsachse verlaufen, so dass sich durch das elektrisches Feld eine Verbreiterung der Brennerflamme in Richtung der Längsachse des Substrats ergibt. Im letztgenannten Fall liegen sich die Elektroden hingegen so gegenüber, dass die elektrische Feldlinien in einer Richtung senkrecht zur Substrat-Längsachse verlaufen, so dass sich durch das elektrisches Feld eine Verbreiterung der Brennerflamme senkrecht zur Längsachse des Substrats ergibt.

Es hat sich besonders bewährt, das Elektrodenpaar aus Plattenelektroden auszubilden, die im unteren Bereich der Brennerflamme angeordnet sind. Die Flachseiten der Platten verlaufen dabei parallel zur Hauptausbreitungsrichtung der Brennerflamme. Hierdurch lässt sich ein über eine längere Strecke homogenes elektrisches Feld erzeugen. Da ionisierte Teilchen im unteren Bereich der Brennerflamme in höherer Konzentration vorkommen als im oberen Bereich, ergibt die Anordnung der Elektroden in diesem Bereich der Brennerflamme einen höheren Wirkungsgrad hinsichtlich der "Feldänderung".

Zweckmäßigerweise sind die Spannungsquelle und die Messeinrichtung mit einer Regelvorrichtung verbunden, mittels der das elektrische Feld in Abhängigkeit von der mittels der Messeinrichtung erfassten geometrischen Kenngröße der Ablagerungsfläche einstellbar ist.

Die Spannungsquelle ist mit der Regeleinrichtung verbunden. Durch die Regelvorrichtung wird die Größe oder Form der Ablagerungsfläche auf einem vorgegebenen Sollwert oder auf einem Mittelwert gehalten, indem die Brennerflamme des Abscheidebrenners durch Anlegen eines elektrischen Feldes mittels der Spannungsquelle individuell angepasst wird. Mittels der Regeleinrichtung lässt sich durch Änderung des elektrischen Feldes somit je nach Ablagerungsfläche dem Abscheidebrenner eine charakteristische Brennerflamme zuordnen. Eine Veränderung der Feldstärke oder eine Änderung der Richtung der Feldlinien wirken sich auf die Brennerflamme aus- insbesondere auf deren Geometrie oder Temperatur. Dadurch läßt sich eine vorgegebene axiale oder radiale Dichte- und Masseverteilung im Rohling gezielt einstellen.

Die Regeleinrichtung korreliert die Einstellung des elektrischen Feldes und damit die Eigenschaft der Brennerflamme mit den Daten zu Größe oder Form der Ablagerungsfläche. Dadurch ist ein Rohling mit vorgegebener Masse- und Dichteverteilung bei vergleichsweise geringem Steuerungs- und Regelungsaufwand herstellbar.

Bei einer besonders bevorzugten Ausgestaltung der erfindungsgemäßen Vorrichtung sind entlang des Substrats mehrere axial voneinander beabstandete Abscheidebrenner, die mittels einer Antriebsvorrichtung in vorgegebenem Bewegungsablauf synchron entlang des sich bildenden Rohlings zwischen Wendepunkten synchron hin- und herbewegbar sind, angeordnet, wobei jedem Abscheidebrenner jeweils ein Elektrodenpaar zur Erzeugung des elektrischen Feldes im Bereich der ihm zugeordneten Brennerflamme zugeordnet ist.

Alle Abscheidebrenner zeigen hierbei den gleichen Bewegungsablauf entlang des Rohlings. Mittels der Regeleinrichtung können die Brennerflammen der Abscheidebrenner jeweils positionsabhängig anhand eines auf sie einwirkenden elektrischen Feldes eingestellt werden, wobei sich dadurch die Temperaturen aller Brennerflammen abhängig von der Position des jeweiligen Abscheidebrenners einstellen lassen. Wesentlich ist, dass jedem Abscheidebrenner jeweils ein Elektrodenpaar zur Erzeugung des elektrischen Feldes im Bereich der ihm zugeordneten Brennerflamme zugeordnet ist. Dadurch lässt sich das elektrisches Feld in der unmittelbaren Nähe der jeweiligen Brennerflamme erzeugen. Die Elektroden des Elektrodenpaars sind dabei vorzugsweise seitlich zur Brennerflamme angeordnet, so dass die Feldlinien die jeweilige Brennerflamme im wesentlichen senkrecht zu deren Ausbreitungsrichtung schneiden. Die Feldlinien können dabei senkrecht oder parallel - zur Längsachse des Substrats verlaufen, oder in jedem beliebigen Zwischenwinkel.

Nachfolgend wird die Erfindung anhand von Ausführungsbeispielen und einer Zeichnung näher erläutert. In der Zeichnung zeigen in schematischer Darstellung im einzelnen:
- **Figur 1:**: eine Ausführungsform der erfindungsgemäßen Vorrichtung zur Durchführung des erfindungsgemäßen Verfahrens in einer Seitenansicht,
- **Figur 2:**: das Ergebnis eines Abscheideprozesses vor Einsatz des erfindungsgemäßen Verfahrens (a), im Vergleich zu dem Ergebnis des Abscheideprozesses nach Einsatz des erfindungsgemäßen Verfahrens (b),
- **Figur 3:**: eine weitere Ausführungsform des erfindungsgemäßen Verfahrens, und
- **Figur 4:**: ein Diagramm zum Flammendurchmesser als Funktion der Zeit bei einer Betriebsweise mit gegenläufiger Änderungsphase benachbarter Abscheidebrenner (a), und eine Brennerreihe bei einer derartigen Betriebsweise (b).

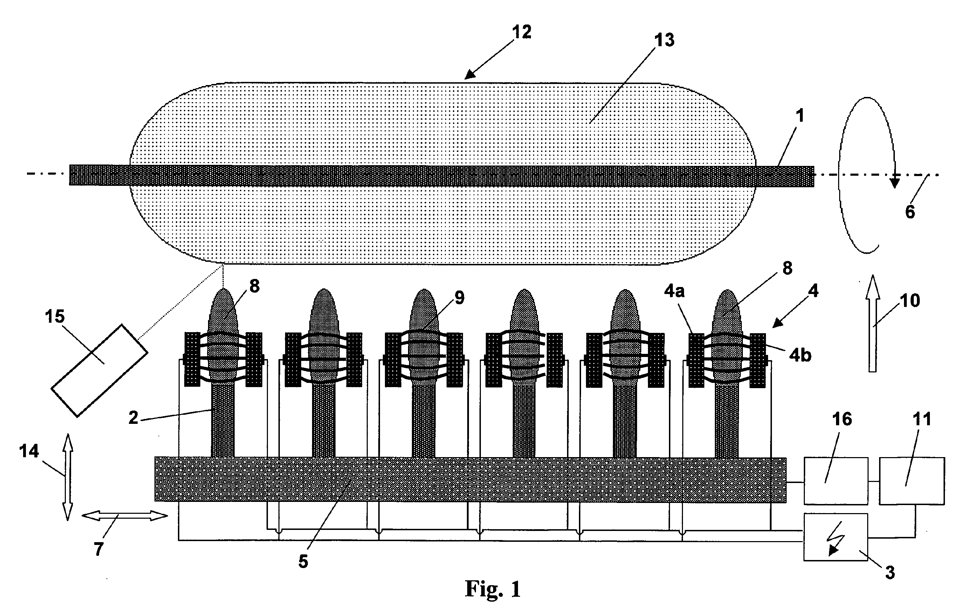

Bei der in **Figur 1** dargestellten Vorrichtung ist ein Trägerrohr 1 aus Aluminiumoxid vorgesehen, entlang dem eine Vielzahl in einer Reihe angeordneter Flammhydrolysebrenner 2 angeordnet sind. Die Flammhydrolyse-Brenner 2 sind auf einem gemeinsamen Brennerblock 5 montiert, der parallel zur Längsachse 6 des Trägerrohrs 1 hin- und herbewegbar und senkrecht dazu verschiebbar ist, wie dies die Richtungspfeile 7 und 14 andeuten. Der Brennerblock 5 ist geerdet. Die Brenner 2 bestehen aus Quarzglas; ihr Abstand zueinander beträgt 15 cm.

Den Brennern 2 ist jeweils ein Elektrodenpaar 4, bestehend aus zwei sich paarweise gegenüberliegenden Plattenelektroden 4a, 4b zugeordnet, die jeweils mit einem Pol einer Hochspannungsquelle 3 verbunden sind. Die Plattenelektroden 4a, 4b sind auf dem Brennerblock 5 montiert und synchron mit den Brennern 2 bewegbar. Die Ebenen der Flachseiten der Plattenelektroden 4a, 4b verlaufen senkrecht zur Längsachse 6 des Trägerrohrs 1, wobei sie die Brennerflamme 8 des jeweiligen Brenners 2 teilweise zwischen sich einschließen. Mittels der Plattenelektroden 4a, 4b kann im Bereich der Brennerflamme 8 ein elektrisches Feld 9 erzeugt werden, das in Figur 1 durch Feldlinien symbolisiert ist. Die Feldlinien verlaufen im wesentlichen senkrecht zur Hauptausbreitungsrichtung 10 der Brennerflammen 8 und parallel zur Längsachse 6 des Trägerrohrs 1.

Für die Regelung der Bewegung des Brennerblocks 5 und für die Einstellung der Feldstärke des elektrisches Feldes 9 ist eine Regeleinrichtung 11 vorgesehen, die mit dem Antrieb 16 für den Brennerblock 5 und mit der Hochspannungsquelle 3 verbunden ist.

Mittels der Brenner 2 werden auf dem um seine Längsachse 6 rotierenden Trägerrohr 1 SiO₂-Partikel abgeschieden, so dass schichtweise der Rohling 13 aufgebaut wird. Hierzu wird der Brennerblock 5 entlang der Längsachse 6 des Trägerrohrs 1 zwischen zwei, in Bezug auf die Längsachse 6 ortsfesten Wendepunkten hin- und herbewegt. Die Amplitude der Hin- und Herbewegung ist mittels des Richtungspfeils 7 charakterisiert. Sie beträgt 15 cm und entspricht damit dem axialen Abstand der Brenner 2 voneinander.

Den Brennern 2 werden jeweils als Brennergase Sauerstoff und Wasserstoff und als Ausgangsmaterial für die Bildung der SiO₂-Partikel gasförmiges SiCl₄ zugeführt. Im Fall einer Dotierung wird den Brennern 2 zusätzlich eine Ausgangssubstanz zur Bildung des Dotierstoffs, wie GeCl₄ zur Bildung von GeO₂, zugeführt.

Die Temperatur der Rohlingoberfläche 12 wird kontinuierlich gemessen. Hierzu ist eine Thermokamera 15 auf die Rohlingoberfläche 12 im Auftreffpunkt der Brennerflamme 8 gerichtet. Die Thermokamera 15 ist ebenfalls mit dem Brennerblock 5 verbunden und wird mit diesem hin- und herbewegt.

Während des Abscheideprozesses wird der Abstand zwischen dem Brennerblock 5 und der Rohlingoberfläche 12 konstant gehalten, indem der Brennerblock 5 in Richtung des Richtungspfeils 14 entsprechend verschoben wird.

Das elektrisches Feld 9 wird in Abhängigkeit vom Durchmesser des sich bildenden Rohlings 13 von Beginn des Abscheideprozesses an stufenweise von 0 kV bis auf 10 kV am Ende des Verfahrens erhöht. Zu Beginn liegt die maximale Breite der Brennerflammen 8 der Abscheidebrenner 2 bei ca. 20 mm. Die Brennerflammen 8 werden mit zunehmender Prozessdauer synchron um etwa 50 % des anfänglichen Wertes aufgeweitet, indem die Feldstärke des elektrischen Feldes 9 im Bereich der Brennerflammen 8 mittels der Regeleinrichtung 11 verändert wird. Hierzu wird die mittels der Hochspannungsquelle 3 die an den Plattenelektroden 4 anliegende Spannung entsprechend verändert, ohne dass es zu einer Gasentladung kommt.

Nachfolgend werden weitere Ausführungsbeispiele für das erfindungsgemäße Verfahren erläutert, wobei zur Bezeichnung gleicher oder äquivalenter Bauteile oder Bestandteile der Vorrichtung dieselben Bezugsziffern wie in Figur 1 verwendet werden.

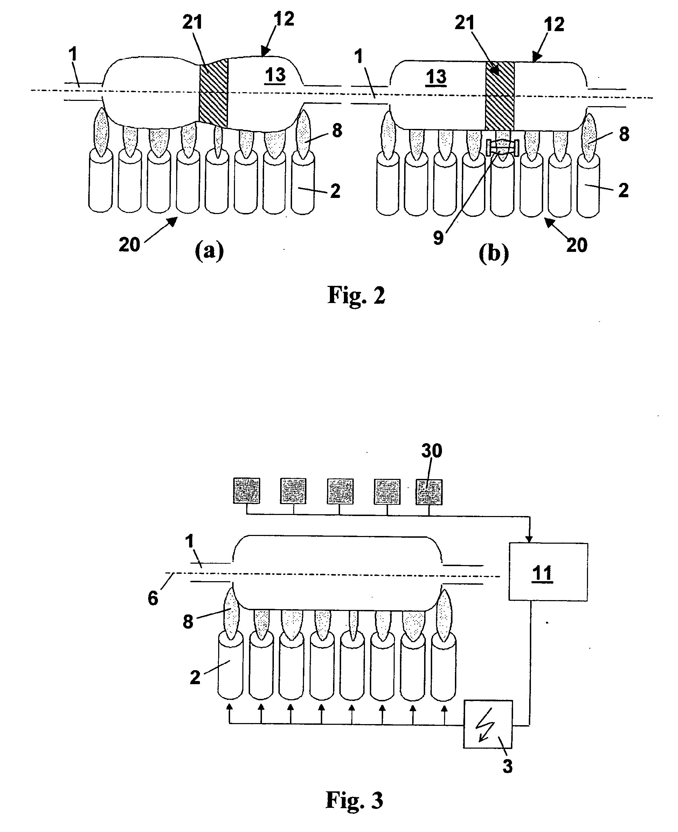

**Figur 2 (a)** zeigt schematisch das Ergebnis eines Abscheideprozesses vor dem Einsatz des erfindungsgemäßen Verfahrens. Durch Dejustierungen der einzelnen Abscheidebrenner 2 der Brennerreihe 20 und aufgrund von konstruktiven Unterschieden der Abscheidebrenner 2 oder der jeweiligen Gaszuleitungen untereinander kommt es zu unterschiedlichen Abscheideverhalten der Abscheidebrenner 2, was zu einer axial ungleichmäßigen Masse- und Dichteverteilung und damit zu einer unregelmäßigen Form der Oberfläche 12 des Rohlings 13 führt. Die untereinander differierenden Abscheideverhalten der Abscheidebrenner 2 sind in Figur 2(a) durch unterschiedliche Breiten der Brennerflammen 8 angedeutet. Jedem Abscheidebrenner 2 ist ein Bereich des Rohlings zugeordnet, der hier als "Ablagerungsfläche" 21 bezeichnet wird.

Die Außengeometrie des Rohling 13 wird nach dem Ende des Abscheideprozesses vermessen. Anhand der Form und dem Außendurchmesser der Ablagerungsfläche 21 kann das Abscheideverhalten des dazugehörenden Abscheidebrenners 2 abgelesen werden. In Abhängigkeit davon werden die Abscheideverhalten der Abscheidebrenner 2 untereinander angeglichen, indem ein auf die Brennerflamme 8 individuell wirkendes, zeitlich konstantes elektrisches Feld 9 erzeugt wird. Mittels des elektrischen Feldes 9 wird die Form der von der Sollform abweichenden Brennerflammen 8 verändert, bis sie der Sollform entsprechen, so dass bei einem anschließenden Abscheideprozess eine glatte, homogene Rohling-Oberfläche 12 erhalten wird, wie dies in **Figur 2b** schematisch dargestellt ist.

Alternativ zu der anhand Figur 2 erläuterten Verfahrensweise wird bei der in **Figur 3** schematisch angedeuteten Verfahrensweise die Außengeometrie des Rohling 13 kontinuierlich überwacht. Hierzu sind mehrere Durchmessermessgeräte 30 über die Länge des Rohlings 13 gleichmäßig verteilt. Diese sind mit einer Regeleinrichtung 11 verbunden. In Abhängigkeit von den Messwerten der Durchmessermessgeräte 30 werden die Brennerflammen 8 der Abscheidebrenner 2 mittels der Regeleinrichtung 11 individuell verändert. Hierzu ist die Breite jeder Brennerflamme 8 - in Richtung der Längsachse 6 gesehen - mittels eines separat ansteuerbaren Elektrodenpaares, das ein auf die Brennerflamme 8 einwirkendes elektrisches Feld 9 erzeugt, individuell veränderbar.

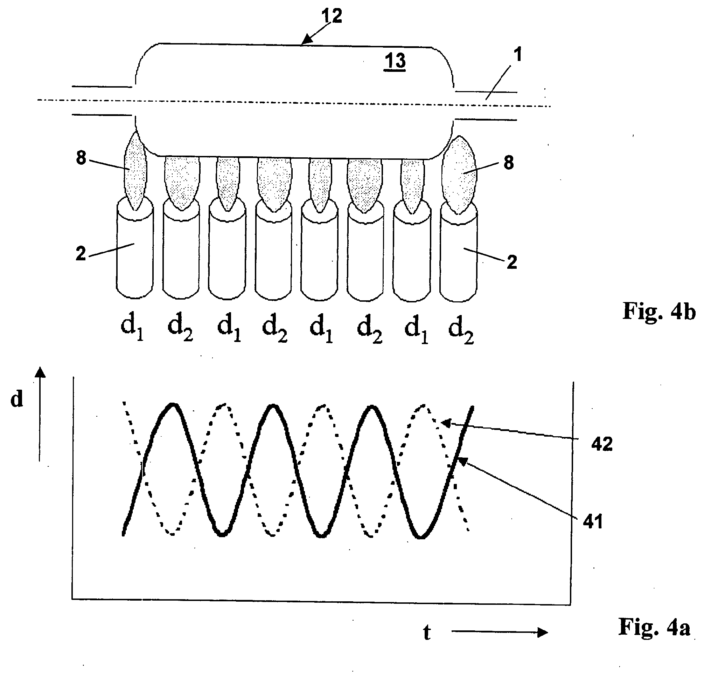

In dem in **Figur 4a** gezeigten Diagramm sind die Änderungszyklen der Durchmesser "d" zweier benachbarter Brennerflammen (in relativen Einheiten) einer ortsfesten Brennerreihe als Funktion der Zeit "t" dargestellt. Dem Änderungszyklus der ersten Brennerflamme ist die durchgezogene Linie 41, dem Änderungszyklus der zweiten Brennerflamme die punktierte Linie 42 zugeordnet. Die Zeit zum Durchlaufen eines Änderungszyklus (Maximum bis Maximum) entspricht etwa 10 Sekunden.

Bei dem in Figur 4a dargestellten Ausführungsbeispiel sind die Änderungszyklen der benachbarten Brennerflammen und somit der entsprechend auf sie einwirkenden elektrischen Felder gegenphasig verschoben. Daher zeigt der eine Abscheidebrenner eine vergleichsweise schmale Brennerflamme, die eine hohe Oberflächentemperatur erzeugt, während gleichzeitig der benachbarte Abscheidebrenner eine vergleichsweise breite Brennerflamme aufweist, die eine dementsprechend niedrigere Oberflächentemperatur erzeugt.

Dies verdeutlicht die schematische Darstellung der Brennerreihe gemäß **Figur 4b.** Aufgrund der gegenphasigen "Feldänderung" zeigen die Abscheidebrenner 2 der gesamten Brennerreihe wechselweise eine Brennerflamme 8 mit kleinem Durchmesser (d₁) und mit großem Durchmesser (d₂). Die "Feldänderung" erfolgt synchron für jeweils beide Hälften der Abscheidebrenner 2.

Bei dieser Betriebsweise ist stets eine vergleichsweise schmälere und damit heißere Brennerflamme von zwei vergleichsweise breiteren und damit kälteren Brennerflammen umgeben. Temperaturspitzen auf der Rohlingoberfläche 12 lassen sich so minimieren.

## Patentansprüche

1. Verfahren für die Herstellung eines SiO₂-Rohlings, bei welchem SiO₂-Partikel in einer Brennerflamme eines Abscheidebrenners gebildet und unter Einwirkung eines elektrischen Feldes auf einem Substrat abgelagert werden, **dadurch gekennzeichnet, dass** die geometrische Form der Brennerflamme (8) in Abhängigkeit der geometrischen Kenngröße einer der Brennerflamme (8) zugeordneten Ablagerungsfläche (12; 21) des Substrats (1) durch Einwirkung des elektrischen Feldes (9) eingestellt wird.

2. Verfahren nach Anspruch 1, **dadurch gekennzeichnet, dass** bei einer Ablagerungsfläche in Form einer Zylindermantelfläche (12) deren Außendurchmesser ermittelt wird, und dass durch Einwirkung des elektrischen Feldes (9) die Breite der Brennerflamme (8) in Abhängigkeit vom Außendurchmesser eingestellt wird.

3. Verfahren nach Anspruch 1 oder 2, **dadurch gekennzeichnet, dass** die geometrische Kenngröße der Ablagerungsfläche (12; 21) fortlaufend ermittelt, und die geometrische Form der Brennerflamme (8) in Abhängigkeit von der ermittelten geometrischen Kenngröße verändert wird.

4. Verfahren nach einem der vorhergehenden Ansprüche, **dadurch gekennzeichnet, dass** mehrere, entlang des Substrats (1) angeordnete und axial voneinander beabstandete Abscheidebrenner (2) eingesetzt werden, die in vorgegebenem Bewegungsablauf synchron entlang des sich bildenden Rohlings (13) zwischen Wendepunkten hin- und herbewegt werden, wobei jedem Abscheidebrenner eine Ablagerungsfläche (12; 21) zugeordnet, und für jede Ablagerungsfläche (12; 21) deren geometrischen Kenngröße ermittelt, und die geometrische Form der jeweiligen Brennerflamme (8) in Abhängigkeit von der ermittelten geometrischen Kenngröße der Ablagerungsfläche (12; 21) durch Einwirkung des elektrischen Feldes (9) individuell eingestellt wird.

5. Verfahren nach Anspruch 4, **dadurch gekennzeichnet, dass** die geometrische Abmessung der jeweiligen Ablagerungsflächen (12; 21) geregelt wird, wobei als Stellgröße für die Regelung die den Brennerflammen (8) jeweils zugeordneten elektrischen Felder (9) dienen.

6. Verfahren nach Anspruch 4 oder 5, **dadurch gekennzeichnet, dass** der individuellen Einstellung der den Brennerflammen (8) zugeordneten elektrischen Felder (9) eine mit dem Bewegungsablauf korrelierte, synchrone Änderung der jeweiligen elektrischen Felder (9) überlagert ist.

7. Verfahren nach einem der vorhergehenden Ansprüche, **dadurch gekennzeichnet, dass** das elektrische Feld (9) derart eingestellt wird, dass eine Gasentladung vermieden wird.

8. Verfahren für die Herstellung eines SiO₂-Rohlings unter Einsatz mehrerer, mit äquidistantem Abstand voneinander entlang eines um eine Längsachse rotierenden Substrats angeordneter Abscheidebrenner, denen jeweils eine Brennerflamme zugeordnet ist, in welcher SiO₂-Partikel gebildet und unter Einwirkung eines elektrischen Feldes auf dem Substrat abgelagert werden, **dadurch gekennzeichnet, dass** die Breite der jeweiligen Brennerflamme (8) - in Richtung der Substrat-Längsachse (6) gesehen - mittels eines auf sie einwirkenden elektrischen Feldes (9) in einem vorgegebenen Änderungszyklus (41; 42) verändert wird, derart, dass die Änderungszyklen (41; 42) benachbarter Brennerflammen (8) synchron und phasenverschoben sind.

9. Verfahren nach Anspruch 8, **dadurch gekennzeichnet, dass** die Änderungszyklen (41; 42) benachbarter Brennerflammen (8) gegenphasig sind.

10. Vorrichtung zur Herstellung eines SiO₂-Rohlings, mit einem Substrat, mit mindestens einem Abscheidebrenner zur Erzeugung von SiO₂-Partikeln in einer dem Abscheidebrenner zugeordneten Brennerflamme, mit einer Messeinrichtung zu Erfassung einer geometrischen Kenngröße im Bereich einer Ablagerungsfläche des SiO₂-Rohlings und mit einem Elektrodenpaar, das mit einer Spannungsquelle verbunden, zur Erzeugung eines im Bereich der Brennerflamme wirkenden elektrischen Feldes dient, **dadurch gekennzeichnet, dass** das elektrische Feld (9) in Abhängigkeit von der geometrischen Kenngröße der der Brennerflamme (8) zugeordneten Ablagerungsfläche (12; 21) des Substrats (1) einstellbar ist.

11. Vorrichtung nach Anspruch 10, **dadurch gekennzeichnet, dass** das Elektrodenpaar (4a, 4b) seitlich zur Brennerflamme (8) - in Richtung der Substrat-Längsachse (6) gesehen - angeordnet ist.

12. Vorrichtung nach Anspruch 10, **dadurch gekennzeichnet, dass** das Elektrodenpaar (4a, 4b) seitlich zur Brennerflamme (8) - senkrecht zur Substrat-Längsachse (6) gesehen - angeordnet ist.

13. Vorrichtung nach einem der Ansprüche 10 bis 12, **dadurch gekennzeichnet, dass** das Elektrodenpaar (4a, 4b) aus Plattenelektroden gebildet wird, die im unteren Bereich der Brennerflamme (8) angeordnet sind.

14. Vorrichtung nach einem der Ansprüche 10 bis 13, **dadurch gekennzeichnet, dass** die Spannungsquelle (3) und die Messeinrichtung (30) mit einer Regelvorrichtung (11) verbunden sind, mittels der das elektrische Feld (9) in Abhängigkeit von der mittels der Messeinrichtung (30) erfassten geometrischen Kenngröße der Ablagerungsfläche (12; 21) einstellbar ist.

15. Vorrichtung nach Anspruch 14, **dadurch gekennzeichnet, dass** entlang des Substrats (1) mehrere axial voneinander beabstandete Abscheidebrenner (2), die mittels einer Antriebsvorrichtung (16) in vorgegebenem Bewegungsablauf synchron entlang des sich bildenden Rohlings (13) zwischen Wendepunkten synchron hin- und herbewegbar sind, angeordnet sind, wobei jedem Abscheidebrenner (2) jeweils ein Elektrodenpaar (4a, 4b) zur Erzeugung des elektrischen (9) Feldes im Bereich der ihm zugeordneten Brennerflamme (8) zugeordnet ist.
